Europäisches Patentamt

European Patent Office

Office européen des brevets

(11) Numéro de publication: **0 192 568**
**A1**

# DEMANDE DE BREVET EUROPEEN

(21) Numéro de dépôt: 86400327.2

(22) Date de dépôt: 17.02.86

(51) Int. Cl.⁴: **H 05 B 7/148**

(30) Priorité: 21.02.85 FR 8502482

(43) Date de publication de la demande:
27.08.86 Bulletin 86/35

(84) Etats contractants désignés:
AT BE CH DE FR GB IT LI LU NL SE

(71) Demandeur: JEUMONT-SCHNEIDER Société anonyme dite:
31-32, Quai de Dion Bouton
F-92811 Puteaux Cedex(FR)

(72) Inventeur: Boisdon, Claude
13, Résidence Bernard Palissy
F-77210 Avon(FR)

(74) Mandataire: Lejet, Christian
Société JEUMONT-SCHNEIDER 31-32, Quai de Dion Bouton
F-92811 Puteaux Cedex(FR)

(54) Dispositif de régulation d'un four à arc à courant continu.

(57) Dispositif de régulation d'un four à arc (1), comportant au moins une électrode (2) alimenté en courant continu à partir d'une source d'alimentation électrique alternative (4), par l'intermédiaire d'un convertisseurs à redresseurs commandés (3).

Le dispositif inclut une boucle (24) de régulation rapide de l'énergie réactive prélevée à la source d'alimentation électrique alternative (4) et un circuit (15) de limitation de l'intensité maximale du courant continu circulant dans l'électrode (2). De préférence, la régulation rapide de l'énergie réactive est obtenue en maintenant sensiblement constant le produit de l'intensité dans la source (4) et du sinus de l'angle de déphasage I. Il inclut en outre une boucle (13) de régulation lente engendrant un signal de référence de l'énergie réactive appliqué à ladite boucle (24) de régulation rapide et lamitant la variation de l'énergie réactive.

EP 0 192 568 A1

./...

## DISPOSITIF DE REGULATION D'UN FOUR A ARC A COURANT CONTINU

La présente invention concerne un dispositif de régulation d'un four à arc alimenté en courant continu à partir d'une source d'alimentation électrique alternative, par l'intermédiaire d'un convertisseur à redresseurs commandés.

On sait que les fours à arc sont la cause de perturbations sur le réseau d'alimentation électrique, telles que des fluctuations de tension. Ces fluctuations déterminent des variations gênantes de la luminosité des lampes à incandescence (effet de flicker). En alimentant le four à arc avec un courant continu, on réduit considérablement cet effet puisqu'il n'est plus nécessaire d'inverser donc ou d'allumer l'arc à tout instant. En outre, en agissant sur le convertisseur à redresseurs commandés, on peut régler très rapidement le courant d'arc. Un tel mode de régulation est par exemple décrit dans le brevet français 2 462 079 selon lequel on régule un arc électrique au moyen d'une régulation primaire de puissance ou d'impédance et d'une régulation secondaire de courant, grâce à une valeur de référence.

Ce mode de régulation en courant trouve de très nombreuses applications dans lesquelles la charge à alimenter est reliée à un convertisseur électronique, lui-même connecté au réseau d'alimentation électrique alternatif. Toutefois, il présente un inconvénient, pour les fours à arc à courant continu, dû aux variations très rapides de la tension d'arc qui, même à courant constant, s'accompagnent de variations très rapides d'énergie réactive, or il faut constater qu'un réseau d'alimentation électrique alternatif présente une réactance beaucoup plus importante que sa résistance. De ce fait, la fluctuation d'énergie réactive résulte des variations de tension qui sont très gênantes lorsqu'elles se produisent à une fréquence inférieure à 25 Hertz.

On peut également agir sur cette tension d'arc en modifiant la longueur de ce dernier, c'est-à-dire en déplaçant l'électrode, mais cette régulation est lente puisque mécanique.

La présente invention a pour but d'obvier à ces inconvénients et de minimiser les perturbations renvoyées dans le réseau d'alimentation électrique alternatif.

Selon la présente invention, le dispositif de régulation inclut une boucle de régulation rapide de l'énergie réactive prélevée sur le réseau d'alimentation électrique alternatif, et un circuit de limitation de l'intensité maximale du courant continu circulant dans l'électrode. De préférence, pour réguler l'énergie réactive, on maintient sensiblement constant le produit de l'intensité dans le réseau alternatif et du sinus de l'angle de déphasage.

De ce fait, en régime de court-circuit, où le cosinus de l'angle de déphasage est très faible, c'est le courant qui est d'abord réduit, ce qui est favorable à la tenue des électrodes, tandis qu'on imposera une valeur normale à l'intensité, au moment où le sinus de l'angle de déphasage est relativement faible.

Le point de fonctionnement cherché est rétabli, par exemple, par une boucle lente de régulation de courant ou de puissance active agissant, soit sur la référence d'énergie réactive, soit sur la levée des électrodes. C'est pourquoi de préférence, le dispositif de régulation inclut aussi une boucle de régulation lente limitant la variation de l'énergie réactive et engendrant un signal de référence de l'énergie réactive appliqué à la boucle de régulation rapide. On peut également ajouter une boucle de régulation limitant le courant appelé en régime transitoire.

L'invention sera mieux comprise et d'autres buts, avantages et caractéristiques de celle-ci apparaîtront plus clairement à la lecture de la description qui suit, d'un mode préféré de réalisation donnée à titre non limitatif et à laquelle une planche de dessin est annexée.

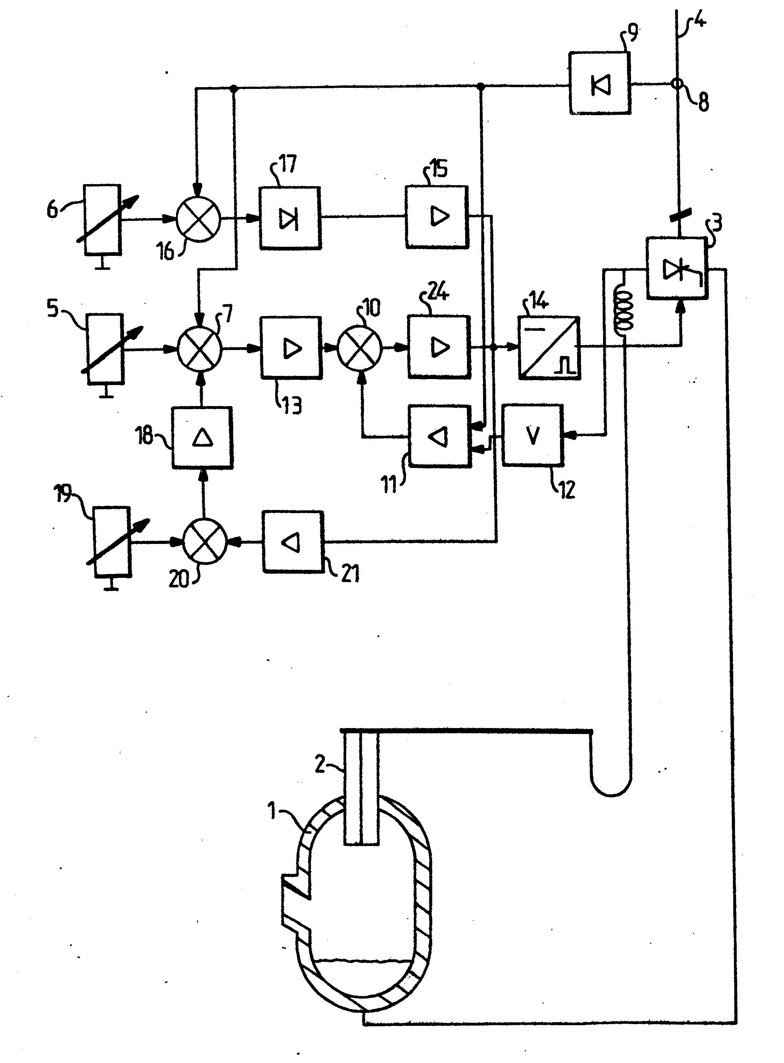

La Figure unique représente schématiquement un dispositif de régulation conforme à la présente invention.

En référence maintenant à la figure, on a représenté en 1 un four à arc, pourvu d'une électrode 2. Le four est alimenté en courant continu grâce à un convertisseur 3 à redresseurs commandés tels que des thyristors, relié au réseau d'alimentation électrique alternatif 4.

Un signal représentant le courant de référence est déterminé schématiquement en 5 et est appliqué à une entrée d'un premier comparateur 7 à une autre entrée duquel est appliqué un signal représentant l'intensité du courant dans le réseau 4.

Sur la Figure, à titre illustratif, l'intensité du courant est mesurée à l'aide d'un transformateur de courant 8, disposé en amont du convertisseur 3, c'est-à-dire sur le réseau 4, et à la sortie duquel on dispose un circuit 9 engendrant le signal représentatif correspondant.

Le signal de sortie de ce premier comparateur 7 est appliqué à un régulateur de courant 13, de réponse lente, qui asservit la valeur du courant à celle déterminée en référence, et qui élabore un signal de référence d'énergie réactive. Ce dernier signal est appliqué à une entrée d'un deuxième comparateur 10, à une autre entrée duquel est appliqué un signal représentatif de l'énergie réactive réelle élaborée par le circuit 11 aux entrées duquel sont appliqués respectivement le signal représentatif du courant et engendré par le circuit 9 et le signal représentatif de la tension d'arc élaboré par le circuit 12.

Le signal issu de ce deuxième comparateur 10 est appliqué à l'entrée d'un régulateur à réponse rapide 24 dont le signal de sortie permet de commander un déphaseur 14, générateur des impulsions de commande des redresseurs du convertisseur 3, c'est-à-dire à la gâchette des thyristors de ce convertisseur 3. La rapidité de ce régulateur doit être telle qu'il atténue les perturbations de fréquences les plus perceptibles en effet Flicker.

En 6, est déterminée l'intensité maximale du courant. Le module de limitation de l'intensité 15 ne reçoit un signal de commande que lorsque le courant dépasse un seuil déterminé. On a représenté schématiquement sur la figure, dans ce but, un troisième comparateur 16 aux entrées duquel sont respectivement appliqués les signaux représentatifs du courant maximal déterminé en 6 et du courant réel déterminé en 9. La sortie de ce comparateur 16 est appliquées à un circuit de seuil 17, qui ne génère un signal de commande à appliquer au module de limitation de l'intensité 15, que lorsque le courant dans le réseau 4 dépasse la valeur déterminée en 6. Dès qu'il est activé, ce module 15 impose alors le signal commandant le déphaseur 14, générateur des impulsions de commande du convertisseur 3.

Le signal commandant le déphaseur 14 est de préférence constitué par une tension continue, de manière à pouvoir être appliqué par l'intermédiaire d'un amplificateur 21 à une entrée d'un quatrième comparateur 20, à une autre entrée duquel est également appliquée une tension maximale déterminée en 19, et à la sortie duquel est disposé un circuit limitateur 18 qui engendre un signal appliqué au premier comparateur 7, pour limiter la croissance du signal de commande dès lors que la tension de commande du déphaseur excède la valeur déterminée en 19, c'est-à-dire pour réduire le courant appelé en régime transitoire.

Sur la Figure, on n'a pas représenté de dispositif mécanique ou hydraulique permettant de relever ou d'abaisser l'électrode 2 dans le four 1. Bien évidemment, de tels dispositifs sont bien connus de l'Homme de l'Art et toute électrode en comporte un. On n'a pas représenté non plus d'autres boucles de régulation internes ou périphériques pouvant également être mises en oeuvre, telle que la boucle de linéarisation du courant, décrite dans le brevet français 1 375 853 ou une boucle périphérique de puissance active, de manière à éclaircir le dessin et mettre mieux en relief l'invention.

Bien que seul un mode de réalisation ait été décrit, il est évident que toute modification apportée par l'Homme de l'Art ne sortirait pas du cadre de la présente invention.

Notamment, on peut adapter ce mode de réalisation à un montage dodécophasé, en doublant sensiblement le nombre de ses composants et en y ajoutant des portes ET, OU, et des circuits sommateurs. On peut en outre disposer une boucle de régulation de la puissance active agissant directement sur la commande de levée de l'électrode, de manière à déterminer le point de fonctionnement du système.

## REVENDICATIONS

1.- Dispositif de régulation d'un four à arc (1), comportant au moins une électrode (2) et alimenté en courant continu à partir d'une source d'alimentation électrique alternative (4), par l'intermédiaire d'un convertisseur à redresseurs commandés (3), caractérisé en ce qu'il inclut une boucle (24) de régulation rapide de l'énergie réactive prélevée à la source d'alimentation électrique alternative (4) et un circuit (15) de limitation de l'intensité maximale du courant continu circulant dans l'électrode (2).

2.- Dispositif de régulation selon la revendication 1, caractérisé en ce que la régulation rapide de l'énergie réactive est obtenue en maintenant sensiblement constant le produit de l'intensité dans la source (4) et du sinus de l'angle de déphasage.

3.- Dispositif de régulation selon la revendication 1 ou 2, caractérisé en ce qu'il inclut en outre une boucle (13) de régulation lente engendrant un signal de référence de l'énergie réactive appliqué à à ladite boucle (24) de régulation rapide et limitant la variation de l'énergie réactive.

4.- Dispositif de régulation selon l'une quelconque des revendications 1 à 3, caractérisé en ce qu'il inclut en outre une boucle de régulation (21,18) limitant le courant appelé par ladite électrode (2) en régime transitoire.

5.- Dispositif de régulation selon la revendication 4, caractérisé en ce que la limitation du courant dans ladite électrode (2) est obtenue en modifiant la valeur du signal de référence appliqué à un déphaseur (14) par l'intermédiaire dudit circuit (15) de limitation de l'inten-

0192568

sité maximale et en limitant le niveau maximal de ce signal par ladite boucle de régulation (21,18).

6.- Dispositif de régulation selon l'une quelconque des revendications 1 à 3, caractérisé en ce que le signal de référence de l'énergie réactive est élaborée en fonction d'un signal représentatif d'une intensité de référence et d'un signal représentatif de l'intensité réelle.

7.- Dispositif de régulation selon la revendication 1 ou 2 caractérisé en ce qu'il inclut en outre une boucle de régulation de puisance active agissant directement sur la commande de levée de ladite électrode (2).

0192568

Office européen
des brevets

**RAPPORT DE RECHERCHE EUROPEENNE**

0192568
Numéro de la demande

EP  86 40 0327

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | | | H 05 B   7/148 |
| A | EP-A-0 068 180  (BBC)<br><br>* Page 4, ligne 1 - page 5, ligne 23; page 8, lignes 1-10 *<br><br>--- | 1,3,4, 7 | |
| A | US-A-2 632 862  (WESTINGHOUSE)<br><br>* Colonne 2, lignes 15-27; colonne 2, ligne 51 - colonne 3, ligne 25 *<br><br>--- | 1,3,4, 7 | |
| A | FR-A-2 266 347  (SIEMENS)<br><br>--- | | |
| A | DE-A-2 440 960  (SIEMENS)<br><br>--- | | DOMAINES TECHNIQUES RECHERCHES (Int. Cl.4) |
| A | FR-A-1 566 366  (ALLEGHENY LUDLUM STEEL CORP.)<br><br>----- | | H 05 B   7/00<br>G 05 F   1/00 |

Le présent rapport de recherche a été établi pour toutes les revendications

| Lieu de la recherche | Date d'achèvement de la recherche | Examinateur |
|---|---|---|
| LA HAYE | 02-05-1986 | RAUSCH R.G. |